# EUROPEAN PATENT APPLICATION

(11) **EP 1 281 620 A1**
(43) Date of publication of application: **05.02.2003**
(21) Application number: 01830523.5
(22) Date of filing: 03.08.2001
(51) Int. Cl.: B65B 51/30

(54) **"Rotary jaw assembly for packaging machines"**

(71) Applicant: CAVANNA S.p.A., I-28077 Prato Sesia Novara (IT)
(72) Inventor: Brolli, Elio, 28077 Prato Sesia (Novara) (IT)
(74) Representative: Bosotti, Luciano

(57) **Abstract**

A rotating-jaw assembly (1) for packaging machines comprises two rotating elements (21, 22; 31, 32) that are able to rotate in opposite directions about respective axes of rotation (X4, X5). Each of the aforesaid rotating elements carries at least one closing jaw (7, 8), which during the movement of rotation of the respective rotating element (21, 22, 31, 32) performs an orbital movement about the respective axis of rotation (X4, X5). The jaws (7, 8) are thus able to co-operate in opposed pairs in a relationship of closing with the successive portions of the wrapping material containing the articles being packaged, which is fed through the two units (2, 3) of which the rotating-jaw assembly 1 is made up. At least in the unit (3) situated in the lower position, i.e., in a position intermediate between the jaws (8), there is set a supporting structure having a general tile-like conformation, comprising three rolling bodies, such as three rollers (13), which are also mounted on the respective rotating element (21, 22) in a position that is generically set alongside the jaws (8). An actuation mechanism (15 to 20) causes, during rotation of the unit (3), the aforesaid rollers (13) to rotate in the same direction as the direction of rotation of the rotating-jaw unit so as to be able to exert, on the wrapping material that is riding on them, not only an action of support but also an action of drawing along, the foregoing in order to keep the wrapping material in proper conditions of tensioning, so facilitating the formation of areas for closing of the ends, particularly as regards bellows-shaped areas.

## Description

The present invention relates to rotating-jaw assemblies for packaging machines according to the preamble of Claim 1.

Rotating-jaw assemblies of the above type have been known, for example, from the patents US-A-4 862 673, US-A-4 914 889, US-A-5 351 464, and US-A-5 467 580, all assigned to the present applicant.

The rotating-jaw assemblies in question are designed to perform a function of closing, sealing and/or cutting in packaging machines that operate on tubular wrapping material, which are currently referred to as "flow-pack" or "form-fill-seal" (FFS) machines.

In the above machines, a web of sheet material that is unwound from a reel is shaped and closed in such a way as to give rise to a continuous rough form having a tubular shape, which is kept moving in its longitudinal direction.

The articles that are to be packaged (which may consist either of single products or of groups of products, possibly already set inside respective packages) are inserted at a pre-set distance inside the aforesaid tubular rough form of wrapping material that is moving.

In order to achieve the above result, the articles packaged are pushed positively (usually by means of a motor-driven conveyor provided with projecting pushers) until the articles themselves are captured by the tubular rough form of wrapping material which draws them along with itself. The ensemble thus formed is then fed forwards through one or more rotating-jaw assemblies which close the wrapper, squeezing it - of course in areas where no articles are present - to form in the squeezed areas sealed end regions. These closed and sealed regions then undergo cutting to form the individual packs. The action of closing and sealing of the wrapper is usually accompanied by a shaping operation aimed at obtaining orderly folding with the formation of so-called "bellows" in the end regions of each package.

Usually, each of the rotating-jaw assemblies in question comprises two counter-rotating units designed to be traversed by the wrapper that is undergoing the closing, sealing and cutting operation in an arrangement whereby the wrapper in question passes over the bottom unit and beneath the top unit. The two units are made to rotate synchronously in such a way that, while the sealing jaw, or one of the sealing jaws, of the bottom unit advances moving upwards, the opposed jaw, or one of the opposed jaws, of the top unit advances moving downwards. The portion of wrapper which each time is to be closed, sealed and cut is thus gripped between the two jaws in question, which describe a generally orbital movement such as to cause the jaws to follow the movement forward of the wrapper. In this way, the operations of formation of the individual packs may be performed continuously without stopping the movement of advance of the products contained in the wrapper. Solutions are moreover known in which the aforesaid operations are performed by two rotating-jaw assemblies which are substantially identical and are cascaded together. The first assembly is designed to perform the function of closing and sealing, whereas the second assembly clinches the seal and performs the function of cutting the closed and sealed areas.

Usually, each one of the rotating-jaw assemblies described previously comprises two (or possibly even more) jaws set equally spaced apart about a corresponding axis of rotation about which the jaws describe a general orbital movement.

The above structure and the corresponding modes of operation are of course based upon the assumption that the rotating jaw should present a maximum diameter at the jaw, and in particular at the outer surface of the jaw designed to act on the wrapper to perform the closing, sealing and cutting operations described previously.

The aim of the foregoing is to have smaller diameters in the other areas (in the case of units with a number of jaws, these are evidently angular intervals that separate the individual jaws), this being a requirement that is altogether evident, given that it is necessary to obtain that in the rotating-jaw unit there are present, between the jaws, spaces in which the areas of the wrapper where the articles that are being packaged can pass without interference.

As has already been said previously, the aforesaid articles are pushed by the conveyor, which ensures that they are fed into the rough tubular form of wrapping material for packaging them until they are effectively received by the rough tubular form itself, into which they are inserted. This condition is in fact unavoidable: if the aforesaid conveyor were able to accompany the articles further, this would inevitably cause a condition of interference between the conveyor, the wrapper and the jaws.

This means that in the stretch between the end of the aforesaid conveyor and the area in which the jaws act, the articles are supported exclusively by the rough tubular form of wrapping material.

During the time interval in which the jaws intervene on the wrapper to close, seal and cut it, the portion of wrapper between the end downstream of the feed conveyor and the jaws themselves is supported on both of its ends (i.e., at the end downstream of the feed conveyor and at the end where it is supported by the jaws). And this in a situation where, precisely on account of the gripping movement of the jaws on the wrapper, the jaws exert a certain tensile action - which may be controlled in a precise way - on the wrapper itself.

During the subsequent time interval, and hence i) after the jaws have formed a new package, separating it from the rough tubular form of wrapping material, and ii) throughout the time interval that lasts until the jaws (typically the next jaws in the order established by the direction of rotation of the rotating-jaw unit) close again on the tubular wrapper, the free distal stretch of the rough tubular form - and the article or articles contained therein - practically jut out from the output end of the feed conveyor.

This condition may prove critical above all in the case where the articles being packaged are quite heavy, for instance, slices of cake with filling, each of which may weigh even a few hundred grams. In this case, the distal stretch of the rough tubular form tends to deflect downwards when it is jutting out of the output end of the feed conveyor. This phenomenon of deflection may give rise to an irregular bending of the rough tubular form during the subsequent step of closing, sealing and cutting.

For this reason, in the past the proposal has already been made to provide the bottom unit of the rotating-jaw assembly, in the angular regions between the individual jaws, with pad-like formations having the function of supporting the stretch of rough tubular form so as to prevent its deflection downwards.

Even though the above solution has proved satisfactory in certain cases, it is not free from drawbacks.

In particular, at least in some cases the solution described above is not able to prevent the undesired phenomenon of irregular bending of the wrapping material, and this phenomenon is sometimes aggravated by the fact that usually the movement of rotation of the jaw unit does not occur at a constant angular velocity, but involves instead the application of a cyclic "hunting" or "swinging" function. As a result, there is a stage of deceleration of rotation until a minimum angular velocity is reached, when the jaw is acting on the wrapper, and a subsequent stage of acceleration which starts as soon as the jaw releases the wrapper. Given that the above-mentioned hunting of the angular velocity occurs in a cyclic way, the aforesaid acceleration stage is followed by a new deceleration stage, and so forth.

Given that the pad-like formations described previously are mounted on the rotating-jaw unit, they are subject to the same phenomenon of hunting of angular velocity. Consequently, this causes a situation in which initially - i.e., while the movement of the jaws is accelerated - the pad-like formation supports the rough tubular form that is jutting out, exerting on the latter a certain tensile action, which is undoubtedly beneficial for keeping the wrapper tensioned. This positive effect is, however, immediately offset (i.e., in a negative sense) by the action of deceleration or braking which inevitably occurs when the angular velocity of the jaw unit is again slowed down according to the general law of hunting described previously.

The purpose of the present invention is to provide a rotating-jaw assembly in which the aforesaid drawback is definitively eliminated.

According to the present invention, the above purpose is achieved thanks to a rotating-jaw assembly having the additional characteristics referred to in the ensuing claims.

The present invention will now be described, purely by way of non-limiting example, with reference to the attached drawings, in which:
- Figure 1 is a general perspective view of a rotating-jaw assembly built according to the invention; and
- Figures 2 and 3 illustrate further constructional details of the solution according to the invention.

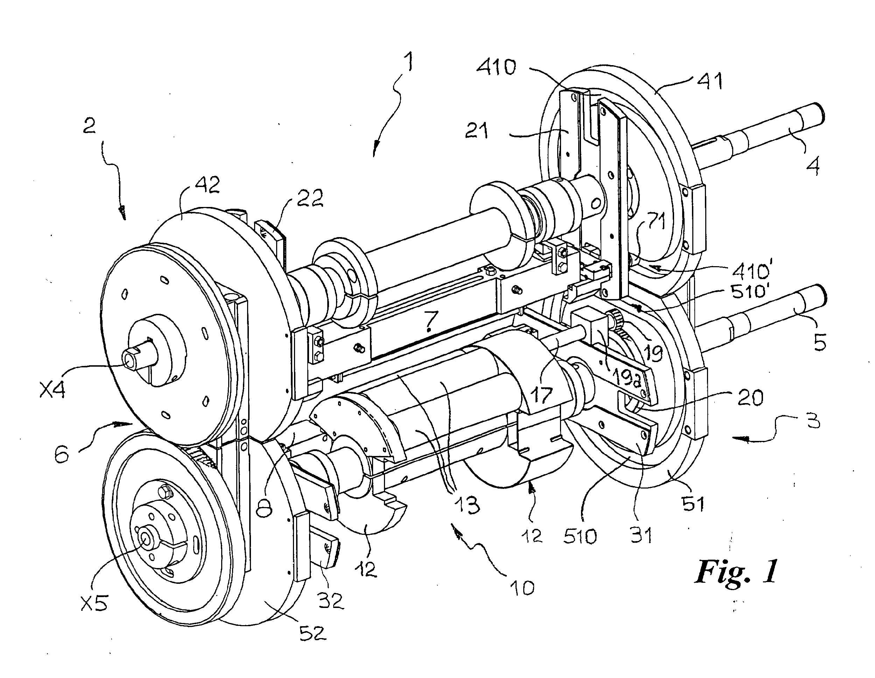

In Figure 1, the reference number 1 designates, as a whole, a rotating-jaw assembly designed to be used in a packaging machine of the type normally referred to as "flow-pack" of "form-fill-seal" (FFS) machine.

For a general description of the above packaging machines, as well as of the constructional criteria and working principles of the corresponding rotating jaws, useful reference may be made to the patent documents cited in the introductory part of the present description.

Persons skilled in the art will immediately realize that the assembly illustrated in Figure 1 has deliberately been represented with some parts removed for simplicity of illustration, and furthermore that the assembly is shown in a position of relative orientation of the parts which, in actual fact, does not correspond to a position that is reached during real operation of the assembly 1.

The representation of Figure 1 may therefore be viewed as roughly corresponding to an intermediate phase of the operation of installation of the assembly 1.

The assembly 1 in question basically comprises two rotating-jaw units, designated by 2 and 3, designed to be - in normal operation of the machine - above (unit 2) and beneath (unit 3) the path of feed of the rough tubular form of wrapping material in which the articles that are being packaged are located.

The reference numbers 4 and 5 designate the shafts for driving the units 2 and 3, respectively, in rotation. The shafts 4 and 5 are designed to be actuated by a driving mechanism, which is not shown but is of a known type, and are kinematically coupled together by means of a gear, designated as a whole by 6. This coupling is designed to ensure, in each operating step, exact phasing, and hence exact synchronization of intervention of the units 2 and 3 on the wrapper.

As has already been said previously, the units 2 and 3 are represented in Figure 1 positioned with respect to one another in a way that does not correspond to an actual operating condition. In actual fact, when the top unit 2 assumes the position illustrated in Figure 1, the bottom unit 3 is rotated exactly by 90° with respect to the condition illustrated in Figure 1. The fact that in Figure 1 the two units 2 and 3 are illustrated as occupying the positions shown is dictated purely by the requirements of clarity of illustration, given that the constructional details of the units 2 and 3 are presented purely by way of reference in so far as they are not of themselves relevant for the purposes of understanding and implementing the invention.

The reference numbers 21 and 22 (bottom unit 2) and 31, 32 (top unit 3) designate supporting moving elements which have a generally H-shaped configuration and are mounted in a centroidal position on the respective shafts 4 and 5, so that they can support, in diametrically opposite positions in each unit 2, 3, respective jaws 7, 8. These are jaws designed to perform the action of closing (squeezing), sealing and cutting the wrapper of the articles that are being packaged.

Each of the units 2 and 3 illustrated here is designed to be equipped with a respective pair of jaws 7 and 8, the jaws of each pair being arranged in diametrically opposite positions with respect to the axes X4 and X5 of the shafts 4 and 5. Once again for reasons of clarity and simplicity of illustration, the drawing of Figure 1 illustrates just one of the jaws of each pair, and in particular:
- for the top unit 2 of the assembly 1, a jaw 7 represented in a lowered position, namely the position in which, during operation of the assembly 1, the jaw 7 acts on the wrapper that wraps the articles that are being packaged; and
- for the bottom unit 3 of the assembly 1, a jaw 8 represented in an intermediate position of its orbital movement, i.e., in a position in which, during operation of the assembly 1, the jaw 8 reaches half-way through the interval between two successive operations of closing, sealing and cutting performed on the wrapper.

The references 41, 42 (top unit 2) and 51, 52 (bottom unit 3) designate two end plates located on the outside with respect to the plates 21, 22 and 31, 32, respectively.

Unlike the plates making up the moving elements 21, 22 and 31, 32 - which are driven in rotation about the X4 and X5 so as to achieve the orbital movement of the jaws 7 and 8 - the plates 41, 42 and 51, 52 are located in fixed positions on the frame of the packaging machine (which is not illustrated as a whole).

The plates 41, 42 and 51, 52 are furrowed by hollowed-out areas or grooves, of which only the grooves 410 and 510, respectively associated to the plates 41 and 51, are shown in Figure 1. The aforesaid grooves basically extend along circular paths centred about the axis X4 (groove 410) and to the axis X5 (groove 510).

Each of the said circular paths has, however, a rectilinear stretch 410' and 510' constituting a sort of "squeezed" stretch located in the area in which the jaws 7 and 8 act on the wrapper of the articles being packaged.

The jaws 7 and 8 are provided at both their ends with cam followers (see the roller 71 in the right-hand top part of Figure 1) which perform the function of followers of the respective cam; in the case of the roller 71 it is evidently the groove 410. Thanks to the arrangement described, the general orbital movement of the jaws 7 and 8 about the axes X4 and X5, respectively, is according to an overall circular path in which there is, however, present a rectilinear stretch, precisely in the stretch where the jaws co-operate together to perform the action of closing, sealing and cutting the wrapper.

The jaws 7 and 8 in most cases carry out sealing of the wrapper by means of local heating of the wrapper induced by resistors embedded in the jaws 7, 8 themselves. The solution described thus enables the jaws 7, 8 to remain for a longer time in contact with the wrapper so as to enable more easily the action of transfer of heat which brings about sealing of the wrapper, the foregoing process corresponding to criteria and principles that are well known to the prior art and which consequently do not require a detailed description herein.

Likewise known, at least in broad terms, is the solution of associating, at least to the unit 3 occupying the bottom position, a supporting structure 10 designed to support the wrapper and the articles contained therein while the wrapper itself is being fed through the unit 2 between two successive actions of closing, sealing and cutting.

In order to clarify this concept (which, on the other hand, is evident for persons skilled in the art), it is assumed that reference is made precisely to the operating condition of the unit 3 represented in Figure 1. It is likewise assumed that the movement of advance of the wrapping material through the assembly 1 takes place from right to left and from top to bottom, as viewed in Figure 1.

The angular condition of the unit 3 represented in the figure thus corresponds to the condition in which the jaw 8 actually represented in the figure is moving downwards after performing the operation of closing, sealing and cutting on a package that is thus separated from the rest of the rough tubular form of wrapping material, at the same time as the other jaw 8 (the one illustrated in Figure 1) is moving upwards in order to engage the rough tubular form of wrapping material downstream of the article that is proceeding through the assembly 1, so as to be able to close, seal and cut the wrapper after the article itself has passed.

In these conditions, the supporting unit 10, basically made up of two tile-like formations 11 which develop in positions diametrically opposite to one another with respect to the shaft 5, with the possibility of rotating with the said shaft 5 about the axis X5, is able to support the wrapper with the articles contained inside it, so preventing an excessive deflection of the wrapping material downwards.

In the solutions according to the prior art the aforesaid tile-like formations 11 are made up of pad-like elements, hence of machined pieces (possibly provided with surface grooves) fixed onto the shaft 5 in such a way as to rotate integrally with the latter.

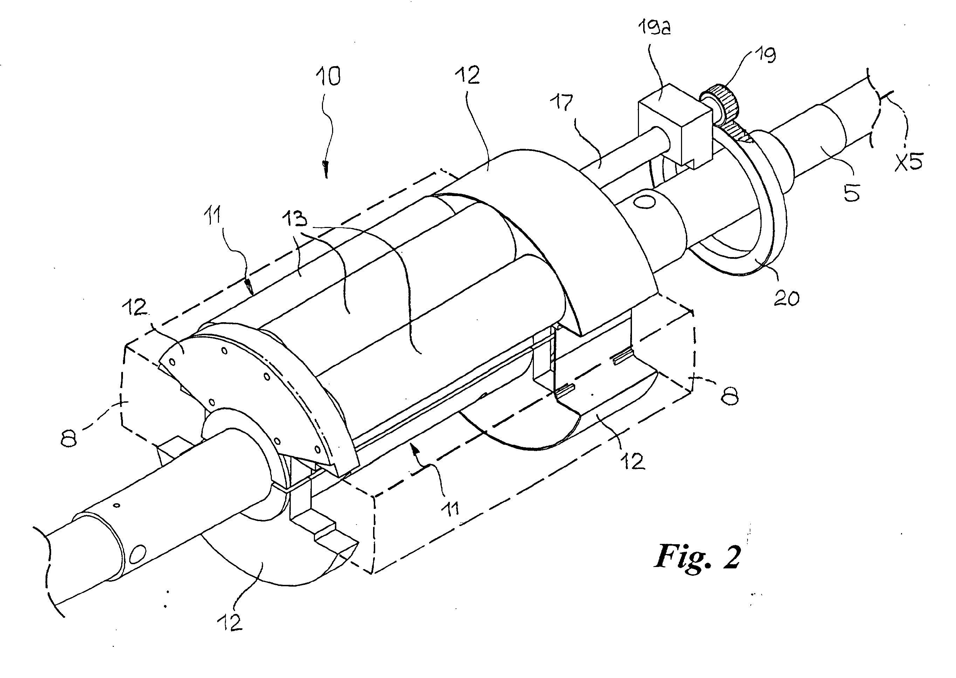

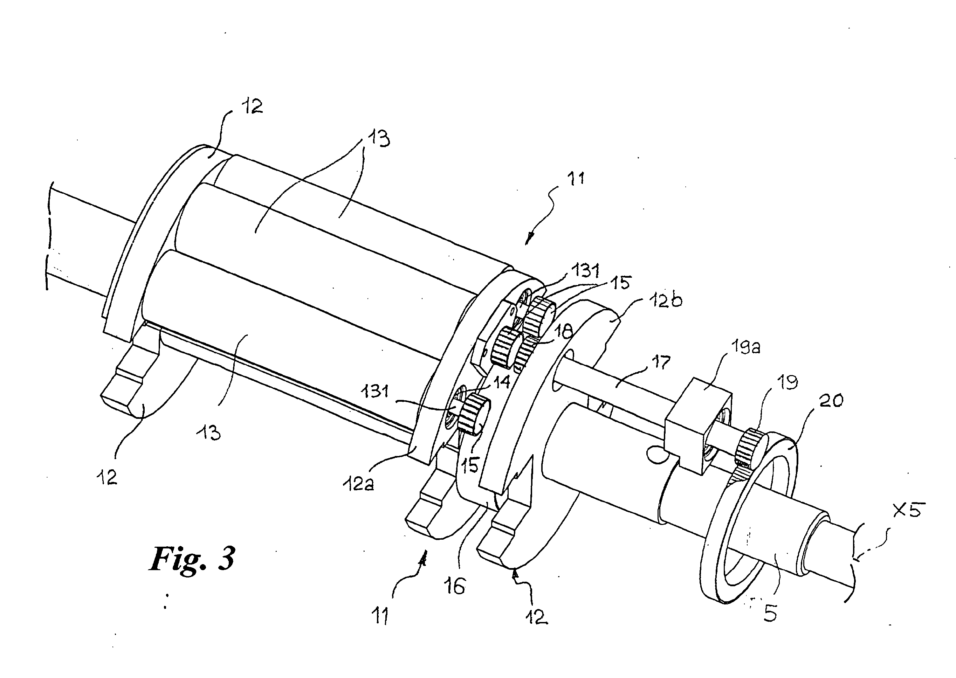

The solution according to the invention envisages, instead, that the tile-like parts 11 are made as is better illustrated in Figures 2 and 3.

In these figures it may be seen that each part or element 11 is in actual fact made up of two end cheeks 12 between which there extend, mounted so that they can turn about respective axes parallel to the axis X5, one or more rolling bodies 13, typically consisting of rollers.

In the example of the embodiment illustrated herein, the use of three rollers is envisaged for each tile-like element 11.

This choice is, however, purely indicative, given that there may be any number of rollers 13. The choice of a three-roller arrangement, however, currently appears to be the preferential one.

As in the case of the representation of Figure 1, also in the case of Figures 2 and 3, for reasons of greater simplicity of illustration a schematic representation has been chosen, omitting some of the parts that make up the device 10.

In particular, it will be appreciated that precisely on account of the general characteristics of symmetry, the structures of the two tile-like elements 11 represented in Figures 2 and 3 are to be considered, as a whole, identical, even though in the case of the tile-like element 11 illustrated in the bottom position, some parts, and namely the rollers 13, are not represented. Hence, what is said with reference to the tile-like element 11 represented in the top position in Figures 2 and 3 is to be understood as applying identically also to the tile-like element 11 located in the bottom position.

Each of the rollers 13 is mounted on the two end cheeks 12 with interposition of bearings 14 in an arrangement whereby the outer surfaces of the rollers 13 extend with an outermost generatrix that lies on the envelope surface, likewise external, of the tile-like element 11 as a whole.

At one of the ends (the one on the left in Figures 2 and 3), the rollers 13 are supported freely on the respective cheek 12 by means of corresponding bearings (not shown in the drawings).

The cheek 12 located in the opposite position has, instead, a double structure in the sense that it is in fact made up of two identical cheeks, designated by 12a and 12b, which are located, respectively, in an internal position and an external position with respect to the general development of the tile-like element 11.

The cheek 12a, located in the internal position, receives the bearings 14 that support the homologous ends of the rollers 13. It is likewise envisaged that each of the rollers 13 in question has a shaft of its own, designated by 131, for driving the roller in rotation, the said shaft carrying at its free end a pinion or sprocket wheel 15.

Each of the sprockets 15 (three in number in the case of the embodiment illustrated herein, where three rollers 13 are present) meshes with a gear wheel 16 which is mounted between the cheek parts 12a and 12b and can turn freely on the shaft 5.

The cheek part 12b situated more externally is traversed by a further shaft 17 located, for instance (persons skilled in the art will immediately appreciate that this solution is not at all imperative), on the prolongation of the axis of rotation of one of the rollers 13 (for example, the roller 13 located in the central position).

The shaft 17 carries at its ends two pinions or sprockets 18 and 19, one at each end.

The pinion or sprocket 18 meshes with the gear 16 described previously, whilst the pinion or sprocket 19, which projects outwards with respect to the element 11, meshes with a further gear 20.

The reference number 19a designates simply a block which enables the shaft 17 to be mounted on the moving element that rotates about the shaft 5. This is usually done by fixing the block 19a on the peripheral area of one of the plates 31, as may be seen in Figure 1.

As may be better seen in Figure 1, the wheel 20 is instead designed to be fixed on one of the cheeks 51 so as to be stationary with respect to the shaft 5 and to the element that carries the sprocket 19. During rotation of the shaft 5, the sprocket 19 is therefore designed to describe a circular path about the wheel 20, remaining in a condition of meshing with the wheel 20 itself.

The overall result that may be achieved with the mechanism described may be readily understood with reference, for example, to Figure 2.

Suppose, for instance, that the shaft 5 is driven in rotation so as to impart on the device 10 a general movement of rotation in a counter-clockwise direction about the axis X5.

Movement in the counter-clockwise direction of the shaft 5 results in the following movements:
- counter-clockwise movement of the sprocket 19, of the shaft 17 and of the sprocket 18;
- clockwise movement of the wheel 16; and
- counter-clockwise movement of the sprockets 15, and hence of the rollers 13, the external surfaces of which consequently move in the same direction as the general direction of rotation of the device 10.

In particular, the overall ratio of transmission of the various gears considered (wheels 19 and 20, wheels 16 and 18, and wheels 15 and 16) is chosen in such a way as to cause the peripheral speed of the rollers 13 to be amply higher than the tangential or peripheral speed of the external surfaces of the "fixed" parts of the tile-like elements 11, i.e., for example, the external surfaces of the cheeks 12.

During machine operation, when the rough tubular form of wrapping material containing the articles tends to rest on the tile-like elements 11, the corresponding supporting surface represented by the external surfaces of the rollers 13 advances with a tangential speed amply higher than the rate of advance of the wrapping material. This is the case also during the stages of rotation of the unit 3, in which the movement of rotation of the shaft 5 is decelerated.

In these conditions, the rollers 13 are thus able to exert continuously on the wrapping material (and on the articles contained therein) an action that is not only one of support but also one of tensile force in the direction of extraction/recession with respect to the feed conveyor. In these conditions, the rough tubular form of wrapping material with the products contained therein tends to be kept in a condition of proper tensioning, thus preventing the formation of irregular folds, and above all facilitating the formation of altogether regular bellows-shaped areas.

This result is therefore obtained, according to the invention, by providing the presence of at least one rolling body, such as the rollers 13, carried by the rotating member represented by the plates 31 and 32 in a position adjacent to the jaws 8. Consequently, the aforesaid rolling body is also able, during rotation of the respective moving element, to perform an orbital movement about its own axis of rotation, so as to operate in a relationship of support with the wrapping material in a position that is intermediate between successive portions of the wrapping material that are undergoing closing, sealing and cutting.

The mechanism of actuation associated to the rollers 13 imparts on the rollers 13 themselves, during rotation of the respective rotating element, a movement of rotation in the same direction as the direction of advance of the wrapping material, so that the rollers 13 co-operate with the wrapping material in a relationship of rolling.

Preferably, the aforesaid actuation mechanism imparts on the external surfaces of the rollers 13 a tangential speed that is at least marginally higher than the tangential speed of the homologous points located in a stationary position on the respective moving element, so that the rollers 13 co-operate with said wrapping material in a relationship of rolling with sliding.

Again in a preferred way, there is envisaged the use of a plurality of rollers arranged in adjacent positions and preferably very close to one another along an arched path centred on the axis of rotation X5 of the respective moving element.

Preferably, it is envisaged that the rotating element 31, 32 of the bottom unit 3 carries at least two respective cheeks 8 set in angular positions equally spaced apart about the respective axis of rotation X5. There are then provided two sets of rollers 13 arranged in angular positions set equally spaced apart about the aforesaid axis of rotation X5. One set of rollers 13 is thus set upstream of a first jaw 8, whilst the other set of rollers 13 is set downstream of a second jaw 8, both jaws being mounted on the same rotating element 31, 32.

In this connection, it will be appreciated that the solution described and illustrated herein in view of a possible application just to the unit 3 situated in the lower position in the assembly 1 may in fact be applied also to the unit 2, which is in the higher position. The possibility of adopting the solution according to the invention by applying it to both of the rotating-jaw units proves important in applications where the axes of rotation X4 and X5 of the two units 2 and 3, instead of being superimposed on one another and oriented in a horizontal direction, were to be set alongside one another and oriented in a vertical direction.

Of course, without prejudice to the principle of the invention, the details of construction and the embodiments may vary widely with respect to what is described and illustrated herein, without thereby departing from the scope of the present invention.

## Claims

1. A rotating-jaw assembly for packaging machines, the assembly (1) comprising at least one rotating element (31, 32) adapted to rotate in a given direction about a respective axis of rotation (X5), the rotating element (31, 32) carrying at least one jaw (8), which during rotation of the element (31, 32) itself, is adapted to perform an orbital movement about said respective axis of rotation (X5) so as to co-operate, in a relationship of closing, with the successive portions of a wrapping material containing articles to be packaged that is made to advance through the rotating-jaw assembly (1),
**characterized in that** it comprises:
- at least one rolling body (13) carried by said at least one rotating element (31, 32) in a position adjacent to said at least one jaw (8) so that said at least one rolling body (13) is also adapted, during rotation of said moving element (31, 32), to perform an orbital movement about said respective axis of rotation (X5) and to co-operate in a relationship of support with said wrapping material in a intermediate position intermediate between said successive portions; and
- an actuating mechanism (15 to 20) to impart on said at least one rolling body (13), during rotation of said moving element (31, 32) about said respective axis of rotation (X5), a movement of rotation in the same direction as said first given direction, so that said at least one rolling body (13) co-operates in a relationship of rolling with said wrapping material.

2. The rotating-jaw assembly according to Claim 1, **characterized in that** said actuating mechanism (15 to 20) imparts on the external surface of said at least one rolling body (13) a tangential speed at least marginally higher than the tangential speed of the homologous points located in a stationary position on the respective element (31, 32), so that said at least one rolling body (13) co-operates, in a relationship of rolling with sliding, with said wrapping material.

3. The rotating-jaw assembly according to Claim 1 or Claim 2, **characterized in that** it comprises a plurality of said rolling bodies (13) arranged in adjacent positions along an arched path centred about said respective axis of rotation (X5).

4. The rotating-jaw assembly according to Claim 3, **characterized in that** it comprises at least three of said rolling bodies (13) arranged in mutually adjacent positions according to an overall arched path so as to give rise to a structure having a general tile-like conformation.

5. The rotating-jaw assembly according to Claim 4, **characterized in that** it comprises three of said rolling bodies (13) arranged very close to one another.

6. The rotating-jaw assembly according to any of the preceding claims, **characterized in that** said mechanism of actuation comprises:
- a pinion (15) adapted to draw in rotation said least one rolling body (13);
- an idler wheel (16) in a relationship of meshing with said pinion (15), said idler wheel being mounted so that it is free to turn freely about said respective axis of rotation (X5);
- at least one further pinion (18, 19) in a relationship of meshing with said idler wheel (16), said at least one further pinion (18, 19) being carried by said element (31, 32) so as to be able to orbit about said respective axis of rotation (X5) during rotation of said element (31, 32) itself; and
- an actuating wheel (20) mounted in a fixed position in a relationship of meshing with said at least one further pinion (18, 19).

7. The rotating-jaw assembly according to any of the preceding claims, **characterized in that** said rotating element (31, 32) carries at least two respective jaws (8) set in positions angularly spaced at equal distances apart about said respective axis of rotation (X5), and **in that** at least one pair of said rolling bodies (13) is provided, arranged in angular positions spaced at equal distances apart about said respective axis of rotation (X5), so that each of said rolling bodies (13) is located respectively upstream of a first jaw (8) and downstream of a second jaw (8), said jaws (8) being mounted on said element (31, 32).

8. The rotating-jaw assembly according to any of the preceding claims, **characterized in that** it comprises two of said rotating elements (21, 22; 31, 32) respectively arranged in a top position (2) and a bottom position (3), and **in that** said at least one rolling body (13) is associated to the rotating element (31, 32) situated in the bottom position in the assembly (1).
